# EUROPEAN PATENT SPECIFICATION

(11) **EP 4 697 570 B1**
(45) Date of publication and mention of the grant of the patent: **04.11.2026**
(21) Application number: 24306363.3
(22) Date of filing: 14.08.2024
(51) Int. Cl.: H02K 9/06, F04D 29/28, F01D 5/02, F01D 5/18, F04D 29/66, H02K 1/32

(54) **COOLING DEVICE FOR A VEHICLE ELECTRIC TRACTION MOTOR, RELATED MOTORIZATION ASSEMBLY AND VEHICLE, AND RELATED MANUFACTURING METHOD**
KÜHLVORRICHTUNG FÜR EINEN ELEKTRISCHEN FAHRMOTOR EINES FAHRZEUGS, ZUGEHÖRIGE MOTORISIERUNGSANORDNUNG UND FAHRZEUG SOWIE ZUGEHÖRIGES HERSTELLUNGSVERFAHREN
DISPOSITIF DE REFROIDISSEMENT POUR MOTEUR DE TRACTION ÉLECTRIQUE DE VÉHICULE, ENSEMBLE DE MOTORISATION ET VÉHICULE ASSOCIÉS ET PROCÉDÉ DE FABRICATION ASSOCIÉ

(43) Date of publication of application: 18.02.2026
(73) Proprietor: ALSTOM Holdings, 93400 Saint-Ouen-sur-Seine (FR)
(72) Inventor: TOPENOT, Margaux, 70100 Gray (FR); VAILLANT, Damien, 25770 Franois (FR)
(74) Representative: Plasseraud IP

(56) References cited:
- EP-A1- 4 035 916
- US-A- 5 411 370
- US-A1- 2009 035 138
- US-B1- 6 224 341

## Description

The present invention relates to a cooling device for an electric traction motor of a vehicle, in particular a railway vehicle.

The invention also relates to a motorization assembly comprising such a cooling device.

The invention also relates to a method for manufacturing such a cooling device.

The vehicle is, for example, a railway vehicle or, alternatively, a motor vehicle, an aircraft or a marine vehicle.

An electric traction motor generates a large amount of heat when running. Consequently, it is necessary to cool an electric traction motor when it is running, in order to avoid overheating and thus ensure safe operation and satisfactory performances of the motor.

In general, a fan is coupled to the rotor of the electric traction motor, so that the fan synchronously rotates with the rotor and creates an air flow that cools the electric traction motor, as also disclosed in EP4035916A1.

However, high vibration levels can be observed on certain parts of the fan, in particular when the motor power supply frequencies coincide with natural frequencies of the rotor. These high vibration levels can lead to premature wear or even breakage of certain parts of the fan. They can also cause high sound power levels.

US 6,224,341 discloses a vibration damped fan in which the blades comprise cavities filled with a low-density granular material. The movements of the granular material particles are associated with frictional losses and hence with reduced vibration and sound levels.

However, forming cavities in the blades can weaken the blades and can induce a shorter service-life.

Moreover, the pressure on the granular material increases towards the tip of the blades, rendering the damping effect difficult to control.

Thus, one aim of the invention is to provide a cooling device for a vehicle traction motor having reduced vibration levels compared to prior art as well as a longer service-life.

To this aim, one subject-matter of the invention is a cooling device for an electric traction motor of a vehicle, the cooling device comprising:
- a base plate extending radially apart from an axis of rotation and configured to be fixed to a shaft of the electric traction motor,
- a cover plate extending radially apart from the axis of rotation,
- a plurality of blades extending axially relative to the axis of rotation between the base plate and the cover plate, and
- at least one main cavity at least partially filled with a damping material, characterized in that at least one from the at least one main cavity extends both in at least one of the blades and in the cover plate.

The cooling device according to the invention may comprise one or more of the following feature(s), taken solely, or according to any technical feasible combination:
- at least one of the at least one main cavity is a non-through cavity;
- the at least one main cavity extends in one half or less of the respective blade radially furthest from the axis of rotation;
- the plurality of blades taken as a whole has an order of rotational symmetry relative to the axis of rotation of n1, n1 being a positive integer, and the main cavities taken as a whole have an order of rotational symmetry relative to the axis of rotation of n2, n2 being a divisor of n1 strictly greater than 1;
- the cooling device comprises at least one additional cavity at least partially filled with a damping material and extending either exclusively in the cover plate, or exclusively in the base plate, or exclusively in one of the blades, or both in at least one of the blades and in the base plate;
- the at least one additional cavity extends in one half or less of the cover plate if applying, or of the base plate if applying, radially furthest from the axis of rotation;
- the additional cavities taken as a whole have an order of rotational symmetry relative to the axis of rotation of n3, n3 being a divisor of n1 strictly greater than 1;
- the damping material of the main cavities and/or the damping material of the additional cavities is chosen among a granular solid material, such as sand, a viscoelastic gel and their mixtures;
- at least two main and/or, if any, additional cavities are filled with two different damping materials;
- the base plate, the cover plate and the blades are parts of an aluminum or cast iron or steel one-piece structure; and
- at least one of the main cavities and/or, if any, additional cavities, is a single-sided cavity having an opening in an external surface of the base plate and/or in an external surface of the cover plate, the cooling device further comprising a closing device configured to removably close the respective single-sided cavity.

The invention also concerns a motorization assembly comprising a cooling device as defined above.

The assembly may comprise for a vehicle, such as a rail vehicle, comprising:
(a) an electric traction motor comprising a rotor rotationally coupled to a stator and a shaft attached to the rotor, and
(b) a cooling device attached to the shaft.

Another subject matter of the invention is a process for manufacturing a cooling device as define above, comprising:
- providing a cooling device comprising:
   (i) a base plate extending radially apart from an axis of rotation and configured to be fixed to a shaft of an electric traction motor,
   (ii) a cover plate extending radially apart from the axis of rotation,
   (iii) a plurality of blades extending axially relative to the axis of rotation between the base plate and the cover plate, at least one blade comprising a first part of at least one main cavity, a second part of the respective main cavity extending in the cover plate, and
- providing at least one damping material,
- at least partially filling the at least one main cavity with the damping material.

The method according to the invention may comprise one or more of the following feature(s), taken solely, or according to any technical feasible combination:
- (i) providing the cover plate in two parts, a first part of the cover plate comprising the second part of each of the main cavities, said second part of each main cavity forming a through cavity in the first part of the cover plate, the base plate,
   the blades and the first part of the cover plate forming a one-piece structure, (ii) subsequently at least partially filling each of the main cavities with the respective damping material, and
   (iii) subsequently attaching a second part of the cover plate to the first part of the cover plate, such that the main cavities form non-through cavities in the cooling device;
- the cooling device provided comprises at least one single-sided cavity having an opening in an external surface of the base plate and/or in an external surface of the cover plate, the process further comprising providing a closing device and removably closing the opening of the single-sided cavity with the closing device, after having at least partially filled the cavity with a damping material.

The invention will be better understood, based on the following description, given solely as an example, and made in reference to the appended drawings, in which:
- Figure 1 is a sectional view of a motorization assembly according to an example of embodiment of the invention,
- Figure 2 is a side view of the motorization assembly of figure 1 without the crankcase and the stator,
- Figure 3 is a sectional view of a particular embodiment of a cooling device according to the invention; and
- Figure 4 is an enlarged view of the area surrounded by a dotted circle in figure 3.

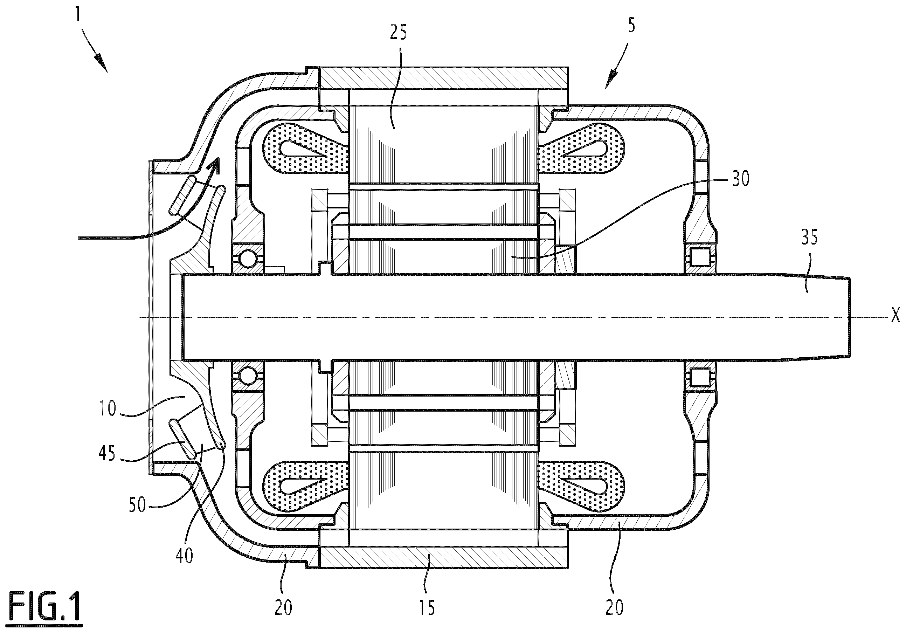

As shown on figure 1, a motorization assembly 1 according to the invention comprises an electric traction motor 5 and a cooling device 10 configured for cooling the electric traction motor 5.

The electric traction motor 5 is adapted for providing traction in a vehicle, for example a railway vehicle or alternatively, a motor vehicle, an aircraft or a marine vehicle.

The electric traction motor 5 comprises a crankcase 15 comprising two flanges 20, a stator 25 fixed relative to the crankcase 15, a rotor 30 rotatable about an axis of rotation X relative to the stator 25 and secured to a shaft 35.

The stator 25 receives electrical power, which is converted into mechanical power delivered on the shaft 35. This power conversion leads to thermal losses and consequently, to overheating of the electric traction motor 5.

The speed of the electric traction motor 5 can be controlled in various manners, for example by power converters using Pulse Width Modulation (PWM) control strategy. In any case, when one or more frequencies of the electrical power supplied to the stator 25 coincides with or approaches a resonant frequency of the electric traction motor 5, high vibration and/or sound power levels can be observed.

The cooling device 10 is configured for improving the dissipation of excess heat in the electric traction motor 5 while limiting the vibration and sound levels in the motorization assembly 1.

The cooling device 10 is shrink-fitted to the shaft 35. Alternatively, the cooling device 10 is removably assembled to the shaft 35, for example by means of a hub.

The cooling device 10 synchronously rotates with the shaft 35 about the axis of rotation X.

In the following specification, the terms axial, axially, radial and radially will be used in relation with the axis of rotation X. An axially extending object extends along the direction of the axis of rotation X, and a radially extending object extends along a direction perpendicular to the axis of rotation X.

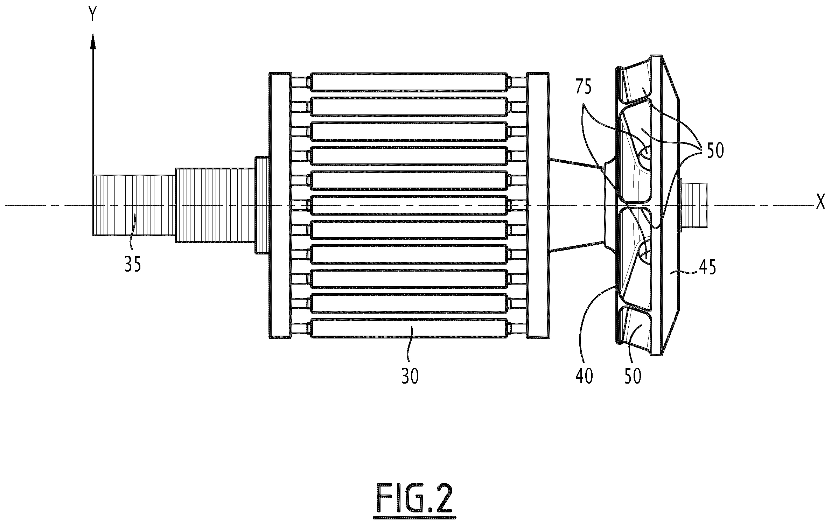

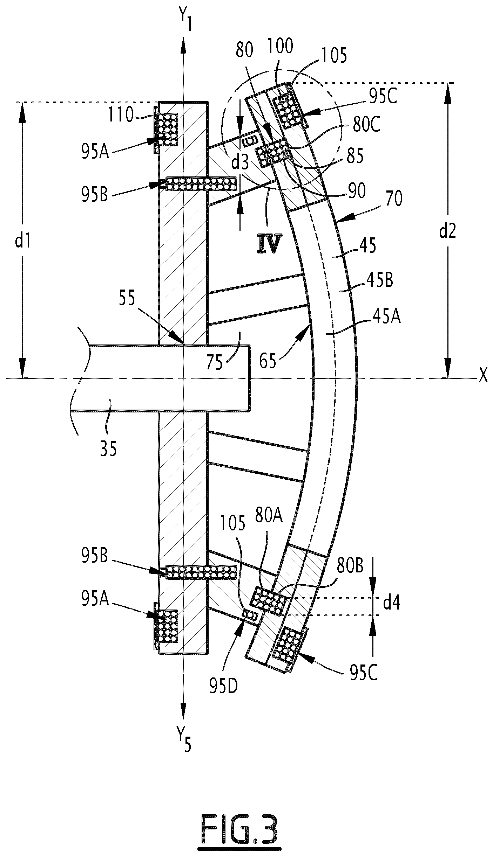

Referring to figures 2 and 3, the cooling device 10 comprises a base plate 40, a cover plate 45 and a plurality of blades 50 extending between the base plate 40 and the cover plate 45.

The base plate 40 delimits a central through hole 55, configured to secure the annular base plate 40 coaxially to the shaft 35.

The base plate 40 extends radially apart from the central through hole 55, up to a characteristic distance d1 from the shaft 35.

Advantageously, the general shape of the base plate 40 is rotationally invariant or not about the axis of rotation X. For example, the base plate 40 has an annular cross-section in a plane orthogonal to the axis of rotation X.

The base plate 40 is for example made of aluminum or of cast iron.

The cover plate 45 extends radially apart from the axis of rotation X over a characteristic distance d2.

The shape of the cover plate 45 depends on the direction of the air flow to be created by the rotation of the cooling device 1.

Advantageously, the cover plate 45 has a general shape rotationally invariant or not about the axis of rotation X.

The cover plate 45 extends axially between a first surface 65 and a second surface 70. In the example, the first surface 65 and the second surface 70 are concave in the direction X. Alternatively, one or both of the first surface 65 and the second surface 70 are flat.

The cover plate 45 is for example made of aluminum or of cast iron or steel.

A plurality of blades 50 extend axially between the base plate 40 and the cover plate 45.

The blades 50 are for example made of aluminum or of cast iron or steel.

In the example of figure 2, the cooling device 10 comprises eight blades 50, each blade 50 extending along a given radial direction Yi (i being an integer ranging from 1 to 8) over a characteristic length d3 and delimiting one through hole 75 with respect to a direction normal to the XYi plane, the through holes 75 allowing the air to circulate between the blades 50 in a continuous volume delimited by the base plate 40 and the cover plate 45.

Advantageously, the plurality of blades 50 taken as a whole have an order of rotational symmetry relative to the axis of rotation of n1, n1 being a positive integer. This provision facilitates the balancing of the cooling device 10.

In the example of figure 2, the radial directions (Yi, Yi+1) of two successive blades 50 form an angle of 45°, such that the eight blades 50 taken as a whole have an order of rotational symmetry of eight relative to the axis of rotation X.

In this case, if the cover plate 45, the base plate 40 and the blades 50 do not form a system having a main axis of inertia corresponding to the axis of rotation X, additional masses configured to compensate for the imbalance can be distributed on part or all of the blades 50 and/or the cover plate 45 and/or the base plate 40.

In a variant, the plurality of blades 50 taken as a whole do not have an order of rotational symmetry relative to the axis of rotation but are positioned so as to form with the cover plate 45 and the base plate 50 a system having a main axis of inertia corresponding to the axis of rotation X.

At least one of the blades 50 comprises a main cavity 80, which extends both in the cover plate 45 and in the respective blade 50.

The main cavity 80 is at least partially filled with a damping material.

Preferably, the damping material is adapted to the working temperatures of the cooling device 10, which can reach 120°C when the electric traction motor 5 is running.

In the example of figure 3, the damping material is a mixture of a granular solid material 85 and of a viscoelastic gel 90. Any other damping material could be considered

The granular solid material 85 is preferably sand.

Alternatively, the damping material consists of the granular solid material 85.

The damping material particles can both move collectively with respect to the stator 25, and individually, with respect to each another. As the cooling device 10 rotates, the relative movements of the damping material particles and their collective movement, which can be out of phase with the respective blade 50 and the cover plate 45, cause frictional losses. These frictional losses reduce the vibration levels at least in the vicinity of the respective main cavity 80.

The inventors have observed that the interface zone between the cover plate 45 and any of the blades 50 is the part of the cooling device 10 that is subjected to the greatest torsional stress, and consequently the area that is the most exposed to damages or failure.

Instead of reinforcing this interface zone, the inventors have chosen to form a main cavity 80 filled with a damping material in this mechanically highly stressed zone. Surprisingly, the vibration reduction allowed by the main cavity 80 more than compensates the weakening induced by the formation of this cavity. In other words, the presence of a main cavity 80 filled with a damping material reduces the vibration levels without reducing and even with increasing the service-life of the cooling device 10.

Due to the very specific position of the main cavity 80, which is associated with very effective vibration damping by the damping material, the inner volume of the main cavity 80 can be limited.

Advantageously, the main cavity 80 extends in one half or less of the respective blade 50 furthest from the axis of rotation X relative to the respective radial direction Yi.

Advantageously, a characteristic dimension d4 of the main cavity 80 along the respective radial direction Yi is less than the half of the characteristic length d3.

Advantageously, the main cavity 80 is a non-through cavity, in particular radially. Thanks to this provision, the walls of the main cavity 80 are not too close to the walls of the respective blade 50 such that the weakening of the blade 50 is limited.

Advantageously, each of at least two of the blades 50 comprises a main cavity 80 filled with a damping material, and the main cavities 80 taken as a whole have an order of rotational symmetry relative to the axis of rotation X of n2, n2 being a divisor of n1 strictly greater than 1. This provision facilitates the balancing of the cooling device 10 and enables a more even distribution of the vibration damping in the cooling device 10. Consequently, the wear of the cooling device 10 is more homogeneous and the service-life of the cooling device 10 is extended.

By way of an example, in figure 3, two, respectively four or eight of the blades 50 can comprise a main cavity 80, such that n2 is equal to two, respectively four or eight.

In this case, all the main cavities 80 are filled with the same damping material.

Advantageously, the cooling device 10 comprises at least one additional cavity 95A extending exclusively in the cover plate 45, and/or one additional cavity 95B extending exclusively in the base plate 40, and/or one additional cavity 95D extending exclusively in one of the blades 50, and/or one additional cavity 95C extending both in at least one of the blades 50 and in the base plate 40.

Optionally, an additional cavity 95D extending exclusively in one of the blades 50 opens onto at least one external wall of the respective blade 50.

The at least one additional cavity 95A, 95B, 95C, 95D is at least partially filled with a damping material.

In the example of figure 3, the damping material is a mixture of a granular solid material 100 and of a viscoelastic gel 105.

The granular solid material 100 is preferably sand.

Alternatively, the damping material consists of the granular solid material 100.

In another variant, the damping material consists of the viscoelastic gel 105.

Advantageously, the damping material 100,105 filling at least one of the additional cavities 95A, 95B, 95C, 95D is different from the damping material 85, 90 filling at least one of the main cavities 80.

The damping material of the additional cavities 95A, 95B, 95C, 95D acts in the same manner as the damping material of the main cavity 80. The additional cavities 95A, 95B, 95C, 95D thus enable to further reduce the vibration level of the cooling device 10.

Advantageously, the additional cavities 95A, 95B, 95C, 95D are positioned in areas subjected to a mechanical stress that is lower than the one of the interfaces between the cover plate 45 and the blades 50 but nonetheless high.

In particular, the additional cavities 95A, 95B, 95C, 95D can be positioned in the peripheral half of the cooling device 10.

Preferably, the at least one additional cavity 95A, 95B, 95C, 95D extends in one half or less, preferably one third, of the cover plate 45 if applying or of the base plate 40 if applying, radially furthest from the axis of rotation, as shown on figure 3.

Advantageously, the at least one additional cavity 95A, 95B, 95C, 95D is a single-sided cavity, either radially or transversally, as represented in figure 3 for additional cavities 95A and 95C, and is provided with a closing device 110. This provision makes it easier to fill the additional cavity 95A, 95B, 95C, 95D and if needed, to replace the damping material. It is worth to not that this provision does not excessively weaken the cooling device 10, since the additional cavities 95A, 95B, 95C, 95D are not placed in the most highly mechanically stressed areas.

The closing device 110 are advantageously formed in the same material as the cover plate 45 or as the base plate 40.

The closing device 110 is configured to removably seal the additional cavity 95A, 95B, 95C, 95D. The closing device 110 is removable in a non-destructive manner. By way of an example, the closing device 110 is screwed on or in the cover plate 45 or on or in the base plate 40.

Advantageously, each of at least two blades 50 comprises an additional cavity 95A, 95B, 95C, 95D filled with a damping material and the additional cavities 95A, 95B, 95C, 95D taken as a whole have an order of rotational symmetry relative to the axis of rotation X of n3, n3 being a divisor of n1 strictly greater than 1. This provision facilitates the balancing of the cooling device 10 and enables a more even distribution of the vibration damping in the cooling device 10. Consequently, the wear of the cooling device 10 is more homogeneous and the service-life of the cooling device 10 is increased.

By way of an example, in figure 3, two, respectively four or eight of the blades 50 can comprise an additional cavity 95A, 95B, 95C, 95D, such that n3 is equal to two, respectively four or eight.

Preferably, n1, n2 and n3 are equal. This provision facilitates the balancing of the cooling device 10 as well as its manufacturing.

For manufacturing the cooling device 10, a one-piece structure comprising the base plate 40, a first part 45A of the cover plate 45 and the plurality of blades 50 is provided.

At least one blade 50 of the one-piece structure comprises a first part 80A of at least one main cavity 80, a second part 80B of the respective main cavity 80 extending in the first part 45A of the cover plate 45, such that the first and second parts 80A, 80B of the main cavity 80 form a single-sided cavity having an opening 80C on an external surface of the first part 45A of the cover plate 45.

The one-piece structure is for example obtained by casting iron or aluminum, and optionally boring the main cavities 80 and the additional cavities 95A, 95B, 95C, 95D.

Then, the at least one main cavity 80 is at least partially filled with the respective damping material 85, 90 via the respective opening 80C.

Last, a second part 45B of the cover plate 45, comprising the required additional cavities 95A, 95B, 95C, 95D, is provided and attached to the first part 45A of the cover plate 45.

The first and second parts 45A, 45B of the cover plate can be permanently attached, for example they can be welded or brazed to each other.

In an alternative embodiment, they are removably attached, for example they are screwed to each other.

Then, the additional cavities 95A, 95B, 95C, 95D are successively or simultaneously at least partially filled with the respective damping material 100, 105.

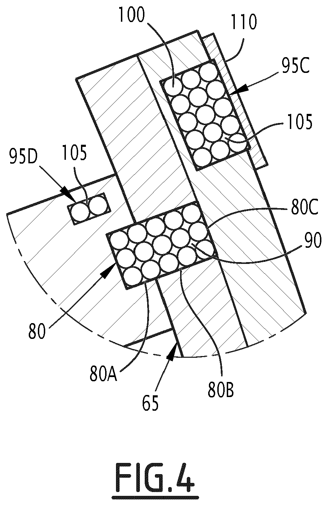

Last, the closing devices 110 are attached to the cover plate 45 or to the base plate 40 so as to removably close the openings of the additional cavities 95A, 95C, as visible on figure 4
In a variant, at least one main cavity 80 comprises an opening on a wall of either the cover plate 45 or the respective blade 50. In this case, the entire cover plate 45 is provided in a one-piece structure with the base plate 40 and the blades 50.

Preferably, the at least one main cavity comprises in this case a channel leading to the opening. Preferably, the channel is configured to allow the filling of the main cavity 80 with the respective damping material 85, 90 without excessively weakening the blade 50. In other words, the channel is as fine as possible.

The main and additional cavities 80, 95A, 95B, 95C, 95D can be bored in the one-piece structure and/or obtained at the casting step of the one-piece structure.

Then, the main and additional cavities 80, 95A, 95B, 95C, 95D are successively or simultaneously at least partially filled with the respective damping material 85, 90, 100, 105.

Last, the closing devices 110 are attached to the cover plate 40 or to the base plate 45 or to the blades 50, so as to removably close the openings of the additional cavities 95A, 95C.

## Claims

1. A cooling device (10) for an electric traction motor (5) of a vehicle, the cooling device (10) comprising:
- a base plate (40) extending radially apart from an axis of rotation (X) and configured to be fixed to a shaft (35) of the electric traction motor (5),
- a cover plate (45) extending radially apart from the axis of rotation (X),
- a plurality of blades (50) extending axially relative to the axis of rotation (X) between the base plate (40) and the cover plate (45), and
- at least one main cavity (80) at least partially filled with a damping material (85, 90), **characterized in that** at least one from the at least one main cavity (80) extends both in at least one of the blades (50) and in the cover plate (45).

2. The cooling device (10) according to claim 1, in which at least one of the at least one main cavities (80) is a non-through cavity.

3. The cooling device (10) according to any of the preceding claims, in which the at least one main cavity (80) extends in one half or less of the respective blade (50) radially furthest from the axis of rotation (X).

4. The cooling device (10) according to any of the preceding claims, in which the plurality of blades (50) taken as a whole has an order of rotational symmetry relative to the axis of rotation (X) of n1, n1 being a positive integer, and in which the main cavities (80) taken as a whole have an order of rotational symmetry relative to the axis of rotation of n2, n2 being a divisor of n1 strictly greater than 1.

5. The cooling device (10) according to any of the preceding claims, further comprising at least one additional cavity (95A, 95B, 95C, 95D) at least partially filled with a damping material (100, 105) and extending either exclusively in the cover plate (45), or exclusively in the base plate (50), or exclusively in one of the blades (50), or both in at least one of the blades (50) and in the base plate (40).

6. The cooling device (10) according to claim 5, in which the at least one additional cavity (95A, 95B, 95C, 95D) extends in one half or less of the cover plate (45) if applying, or of the base plate (40) if applying, radially furthest from the axis of rotation (X).

7. The cooling device (10) according to claim 4 and to any of claims 5 to 6, in which the additional cavities (95A, 95B, 95C, 95D) taken as a whole have an order of rotational symmetry relative to the axis of rotation of n3, n3 being a divisor of n1 strictly greater than 1.

8. The cooling device (10) according to any of the preceding claims, in which the damping material (85, 90) of the main cavities (80) and/or the damping material (100, 105) of the additional cavities (95A, 95B, 95C, 95D) is chosen among a granular solid material, such as sand, a viscoelastic gel and their mixtures.

9. The cooling device (10) according to any of the preceding claims, comprising at least two main and/or, if any, additional cavities (95A, 95B, 95C, 95D) filled with two different damping materials (85, 90, 100, 105).

10. The cooling device (10) according to any of the preceding claims, in which the base plate (40), the cover plate (45) and the blades (50) are parts of an aluminum or cast iron or steel one-piece structure.

11. The cooling device (10) according to the preceding claim, in which at least one of the main cavities (80) and/or, if any, additional cavities (95A, 95B, 95C, 95D), is a single-sided cavity having an opening in an external surface of the base plate (40) and/or in an external surface of the cover plate (50), the cooling device (10) further comprising a closing device (110) configured to removably close the respective single-sided cavity.

12. A motorization assembly (1) for a vehicle, such as a rail vehicle, comprising:
(a) an electric traction motor (5) comprising a rotor (30) rotationally coupled to a stator (25) and a shaft (35) attached to the rotor (30), and
(b) a cooling device (10) according to any of the preceding claims and attached to the shaft (35).

13. A Method for manufacturing a cooling device (10) according to any of claims 1 to 11, comprising:
- providing a cooling device comprising:
(i) a base plate (40) extending radially apart from an axis of rotation (X) and configured to be fixed to a shaft (35) of an electric traction motor (5),
(ii) a cover plate (45) extending radially apart from the axis of rotation (X),
(iii a plurality of blades (50) extending axially relative to the axis of rotation (X) between the base plate (45) and the cover plate (45), at least one blade (50) comprising a first part (80A) of at least one main cavity (80), a second part (80B) of the respective main cavity (80) extending in the cover plate (45),
and
- providing at least one damping material (85, 90),
- at least partially filling the at least one main cavity (80) with the damping material (85, 90).

14. The method according to claim 13 comprising :
(i) providing the cover plate (45) in two parts, a first part (45A) of the cover plate (45) comprising the second part (80B) of each of the main cavities (80), said second part (80B) of each main cavity forming a through cavity in the first part (45A) of the cover plate (45), the base plate (40),
the blades (50) and the first part (45A) of the cover plate (45) forming a one-piece structure,
(ii) subsequently at least partially filling each of the main cavities (80) with the respective damping material (85, 90), and
(iii) subsequently attaching a second part (45B) of the cover plate (45) to the first part (45A) of the cover plate (45), such that the main cavities (80) form non-through cavities in the cooling device (10).

15. The method according to any of claims 13 and 14, in which the cooling device (10) provided comprises at least one single-sided cavity having an opening in an external surface of the base plate (40) and/or in an external surface of the cover plate (45), the process further comprising providing a closing device (110) and removably closing the opening of the single-sided cavity with the closing device (110), after having at least partially filled the cavity with a damping material.

## Patentansprüche

1. Kühlvorrichtung (10) für einen elektrischen Fahrmotor (5) eines Fahrzeugs, wobei die Kühlvorrichtung (10) umfasst:
- eine Basisplatte (40), welche sich radial weg von einer Rotationsachse (X) erstreckt und dazu eingerichtet ist, an einer Welle (35) des elektrischen Fahrmotors (5) befestigt zu sein,
- eine Abdeckplatte (45), welche sich radial weg von der Rotationsachse (X) erstreckt,
- eine Mehrzahl von Schaufeln (50), welche sich relativ zu der Rotationsachse (X) axial zwischen der basisplatte (40) und der Abdeckplatte (45) erstrecken, und
- wenigstens eine Hauptkavität (80), welche wenigstens partiell mit einem Dämpfungsmaterial (85, 90) gefüllt ist,
**dadurch gekennzeichnet, dass** wenigstens eine von der wenigstens einen Hauptkavität (80) sich sowohl in wenigstens eine der Schaufeln (50) als auch in die Abdeckplatte (45) erstreckt.

2. Kühlvorrichtung (10) nach Anspruch 1, bei welcher wenigstens eine der wenigstens einen Hauptkavität (80) eine nicht durchgehende Kavität ist.

3. Kühlvorrichtung (10) nach einem der vorhergehenden Ansprüche, bei welcher sich die wenigstens eine Hauptkavität (80) von der Rotationsachse (X) radial am entferntesten in einer Hälfte oder weniger von der jeweiligen Schaufel (50) erstreckt.

4. Kühlvorrichtung (10) nach einem der vorhergehenden Ansprüche, bei welcher die Mehrzahl von Schaufeln (50) als Gesamtheit betrachtet relativ zu der Rotationsachse (X) eine Rotationssymmetrieordnung von n1 aufweist, wobei n1 eine positive Ganzzahl ist, und bei welcher die Hauptkavitäten (80) als Gesamtheit betrachtet relativ zu der Rotationsachse eine Rotationssymmetrieordnung von n2 aufweisen, wobei n2 ein Teiler von n1, welcher strikt größer als 1 ist.

5. Kühlvorrichtung (10) nach einem der vorhergehenden Ansprüche, ferner umfassend wenigstens eine zusätzliche Kavität (95A, 95B, 95C, 95D), welche wenigstens partiell mit einem Dämpfungsmaterial (100, 105) gefüllt ist und sich entweder ausschließlich in der Abdeckplatte (45), oder ausschließlich in der Basisplatte (40), oder ausschließlich in einer der Schaufeln (50), oder sowohl in wenigstens einer der Schaufeln (50) als auch in der Basisplatte (40) erstreckt.

6. Kühlvorrichtung (10) nach Anspruch 5, bei welcher die wenigstens eine zusätzliche Kavität (95A, 95B, 95C, 95D) sich von der Rotationsachse (X) radial am entferntesten in einer Hälfte oder weniger von der Abdeckplatte (45), wenn zutreffend, oder von der Basisplatte (40) erstreckt, wenn zutreffend.

7. Kühlvorrichtung (10) nach Anspruch 4 und nach einem der Ansprüche 5 bis 6, bei welcher die zusätzlichen Kavitäten (95A, 95B, 95C, 95D) als Gesamtheit betrachtet relativ zu der Rotationsachse eine Rotationssymmetrieordnung von n3 aufweisen, wobei n3 ein Teiler von n1 ist, welcher strikt größer als 1 ist.

8. Kühlvorrichtung (10) nach einem der vorhergehenden Ansprüche, bei welcher das Dämpfungsmaterial (85, 90) der Hauptkavitäten (80) und/oder das Dämpfungsmaterial (100, 105) der zusätzlichen Kavitäten (95A, 95B, 95C, 95D) ausgewählt aus einem granularen Festkörpermaterial wie Sand, einem viskoelastischen Gel und deren Mischungen.

9. Kühlvorrichtung (10) nach einem der vorhergehenden Ansprüche, umfassend wenigstens zwei Hauptkavitäten und/oder, sofern vorhanden, zusätzliche Kavitäten (95A, 95B, 95C, 95D), welche mit zwei verschiedenen Dämpfungsmaterialien (85, 90, 100, 105) gefüllt sind.

10. Kühlvorrichtung (10) nach einem der vorhergehenden Ansprüche, bei welcher die Basisplatte (40), die Abdeckplatte (45) und die Schaufeln (50) Teile einer einteiligen Aluminium- oder Gusseisen- oder Stahl-Struktur sind.

11. Kühlvorrichtung (10) nach dem vorhergehenden Anspruch, bei welcher wenigstens eine der Hauptkavitäten (80) und/oder, sofern vorhanden, zusätzlichen Kavitäten (95A, 95B, 95C, 95D), eine einseitige Kavität ist, welche eine Öffnung in einer Außenfläche der Basisplatte (40) und/oder in einer Außenfläche der Abdeckplatte (45) aufweist, wobei die Kühlvorrichtung (10) ferner eine Verschlussvorrichtung (110) umfasst, welche dazu eingerichtet ist, die jeweilige einseitige Kavität entfernbar zu verschließen.

12. Motorisierungsanordnung (1) für ein Fahrzeug, wie zum Beispiel ein Schienenfahrzeug, umfassend:
(a) einen elektrischen Fahrmotor (5), welcher einen Rotor (30), welcher rotierbar mit einem Stator (25) gekoppelt ist, und eine Welle (35) umfasst, welche mit dem Rotor (30) verbunden ist, und
(b) eine Kühlvorrichtung (10) nach einem der vorhergehenden Ansprüche, welche mit der Welle (35) verbunden ist.

13. Verfahren zum Herstellen einer Kühlvorrichtung (10) nach einem der Ansprüche 1 bis 11, umfassend:
- Bereitstellen einer Kühlvorrichtung, umfassend:
(i) eine Basisplatte (40), welche sich radial weg von einer Rotationsachse (X) erstreckt und dazu eingerichtet ist, an einer Welle (35) eines elektrischen Fahrmotors (5) befestigt zu sein,
(ii) eine Abdeckplatte (45), welche sich radial weg von der Rotationsachse (X) erstreckt,
(iii) eine Mehrzahl von Schaufeln (50), welche sich relativ zu der Rotationsachse (X) axial zwischen der Basisplatte (40) und der Abdeckplatte (45) erstrecken, wobei wenigstens eine Schaufel (50) einen ersten Teil (80A) wenigstens einer Hauptkavität (80) umfasst und sich ein zweiter Teil (80B) der jeweiligen Hauptkavität (80) in der Abdeckplatte (45) erstreckt,
und
- Bereitstellen wenigstens eines Dämpfungsmaterials (85, 90),
- wenigstens partielles Füllen der wenigstens einen Hauptkavität (80) mit dem Dämpfungsmaterial (85, 90).

14. Verfahren nach Anspruch 13, umfassend:
(i) Bereitstellen der Abdeckplatte (45) in zwei Teilen, wobei ein erster Teil (45A) der Abdeckplatte (45) den zweiten Teil (80B) jeder der Hauptkavitäten (80) umfasst, wobei der zweite Teil (80B) jeder Hauptkavität eine durchgehende Kavität in dem ersten Teil (45A) der Abdeckplatte (45) bildet und die Basisplatte (40), die Schaufeln (50) und der erste Teil (45A) der Abdeckplatte (45) eine einteilige Struktur bilden,
(ii) nachfolgend wenigstens partielles Füllen von jeder der Hauptkavitäten (80) mit dem jeweiligen Dämpfungsmaterial (85, 90), und
(iii) nachfolgend Verbinden eines zweiten Teils (45B) der Abdeckplatte (45) mit dem ersten Teil (45A) der Abdeckplatte (45), sodass die Hauptkavitäten (80) nicht durchgehende Kavitäten in der Kühlvorrichtung (10) bilden.

15. Verfahren nach einem der Ansprüche 13 und 14, bei welchem die bereitgestellte Kühlvorrichtung (10) wenigstens eine einseitige Kavität umfasst, welche eine Öffnung in einer Außenfläche der Basisplatte (40) und/oder in einer Außenfläche der Abdeckplatte (45) aufweist, wobei das Verfahren ferner umfasst ein Bereitstellen einer Verschlussvorrichtung (110) und ein entfernbares Verschließen der Öffnung der einseitigen Kavität mit der Verschlussvorrichtung (110) umfasst, nachdem die Kavität wenigstens partiell mit einem Dämpfungsmaterial gefüllt wurde.

## Revendications

1. Dispositif de refroidissement (10) pour un moteur de traction électrique (5) d'un véhicule, le dispositif de refroidissement (10) comprenant :
- une plaque de base (40) s'étendant radialement en éloignement par rapport à un axe de rotation (X) et configurée pour être fixée à un arbre (35) du moteur de traction électrique (5),
- une plaque de recouvrement (45) s'étendant radialement en éloignement par rapport à l'axe de rotation (X),
- une pluralité de pales (50) s'étendant axialement par rapport à l'axe de rotation (X) entre la plaque de base (40) et la plaque de recouvrement (45), et
- au moins une cavité principale (80) au moins partiellement remplie d'une matière d'amortissement (85, 90), **caractérisé en ce qu'**au moins l'une parmi l'au moins une cavité principale (80) s'étend à la fois dans au moins l'une des pales (50) et dans la plaque de recouvrement (45).

2. Dispositif de refroidissement (10) selon la revendication 1, dans lequel au moins l'une parmi l'au moins une cavité principale (80) est une cavité non traversante.

3. Dispositif de refroidissement (10) selon l'une quelconque des revendications précédentes, dans lequel l'au moins une cavité principale (80) s'étend dans une moitié ou moins de la pale (50) respective radialement la plus éloignée de l'axe de rotation (X).

4. Dispositif de refroidissement (10) selon l'une quelconque des revendications précédentes, dans lequel la pluralité de pales (50) prises dans leur ensemble présente un ordre de symétrie de rotation par rapport à l'axe de rotation (X) de n1, n1 étant un nombre entier positif, et dans lequel les cavités principales (80) prises dans leur ensemble présentent un ordre de symétrie de rotation par rapport à l'axe de rotation de n2, n2 étant un diviseur de n1 strictement supérieur à 1.

5. Dispositif de refroidissement (10) selon l'une quelconque des revendications précédentes, comprenant en outre au moins une cavité supplémentaire (95A, 95B, 95C, 95D) au moins partiellement remplie d'une matière d'amortissement (100, 105) et s'étendant soit exclusivement dans la plaque de recouvrement (45), soit exclusivement dans la plaque de base (40), soit exclusivement dans l'une des pales (50), soit à la fois dans au moins l'une des pales (50) et dans la plaque de base (40).

6. Dispositif de refroidissement (10) selon la revendication 5, dans lequel l'au moins une cavité supplémentaire (95A, 95B, 95C, 95D) s'étend dans une moitié ou moins de la plaque de recouvrement (45) le cas échéant, ou de la plaque de base (40) le cas échéant, radialement la plus éloignée de l'axe de rotation (X).

7. Dispositif de refroidissement (10) selon la revendication 4 et selon l'une quelconque des revendications 5 à 6, dans lequel les cavités supplémentaires (95A, 95B, 95C, 95D) prises dans leur ensemble présentent un ordre de symétrie de rotation par rapport à l'axe de rotation de n3, n3 étant un diviseur de n1 strictement supérieur à 1.

8. Dispositif de refroidissement (10) selon l'une quelconque des revendications précédentes, dans lequel la matière d'amortissement (85, 90) des cavités principales (80) et/ou la matière d'amortissement (100, 105) des cavités supplémentaires (95A, 95B, 95C, 95D) est sélectionnée parmi une matière solide granulaire, telle que le sable, un gel viscoélastique et leurs mélanges.

9. Dispositif de refroidissement (10) selon l'une quelconque des revendications précédentes, comprenant au moins deux cavités principales et/ou, le cas échéant, cavités supplémentaires (95A, 95B, 95C, 95D) remplies de deux matières d'amortissement différentes (85, 90, 100, 105).

10. Dispositif de refroidissement (10) selon l'une quelconque des revendications précédentes, dans lequel la plaque de base (40), la plaque de recouvrement (45) et les pales (50) font partie d'une structure monobloc en aluminium ou en fonte ou en acier.

11. Dispositif de refroidissement (10) selon la revendication précédente, dans lequel au moins l'une des cavités principales (80) et/ou, le cas échéant, cavités supplémentaires (95A, 95B, 95C, 95D), est une cavité à un seul côté ayant une ouverture dans une surface externe de la plaque de base (40) et/ou dans une surface externe de la plaque de recouvrement (45), le dispositif de refroidissement (10) comprenant en outre un dispositif de fermeture (110) configuré pour fermer de manière amovible la cavité à un seul côté respective.

12. Ensemble de motorisation (1) pour un véhicule, tel qu'un véhicule ferroviaire, comprenant :
(a) un moteur de traction électrique (5) comprenant un rotor (30) couplé en rotation à un stator (25) et un arbre (35) fixé au rotor (30), et
(b) un dispositif de refroidissement (10) selon l'une quelconque des revendications précédentes et fixé à l'arbre (35).

13. Procédé de fabrication d'un dispositif de refroidissement (10) selon l'une quelconque des revendications 1 à 11, comprenant :
- la fourniture d'un dispositif de refroidissement comprenant :
(i) une plaque de base (40) s'étendant radialement en éloignement par rapport à un axe de rotation (X) et configurée pour être fixée à un arbre (35) d'un moteur de traction électrique (5),
(ii) une plaque de recouvrement (45) s'étendant radialement en éloignement par rapport à l'axe de rotation (X),
(iii) une pluralité de pales (50) s'étendant axialement par rapport à l'axe de rotation (X) entre la plaque de base (40) et la plaque de recouvrement (45), au moins une pale (50) comprenant une première partie (80A) d'au moins une cavité principale (80), une deuxième partie (80B) de la cavité principale (80) respective s'étendant dans la plaque de recouvrement (45),
et
- la fourniture d'au moins une matière d'amortissement (85, 90),
- le remplissage au moins partiel de l'au moins une cavité principale (80) avec la matière d'amortissement (85, 90).

14. Procédé selon la revendication 13 comprenant :
(i) la fourniture de la plaque de recouvrement (45) en deux parties, une première partie (45A) de la plaque de recouvrement (45) comprenant la deuxième partie (80B) de chacune des cavités principales (80), ladite deuxième partie (80B) de chaque cavité principale formant une cavité traversante dans la première partie (45A) de la plaque de recouvrement (45), la plaque de base (40),
les pales (50) et la première partie (45A) de la plaque de recouvrement (45) formant une structure monobloc,
(ii) ultérieurement, le remplissage au moins partiel de chacune des cavités principales (80) avec la matière d'amortissement (85, 90) respective, et
(iii) ultérieurement, la fixation d'une deuxième partie (45B) de la plaque de recouvrement (45) à la première partie (45A) de la plaque de recouvrement (45), de sorte que les cavités principales (80) forment des cavités non traversantes dans le dispositif de refroidissement (10).

15. Procédé selon l'une quelconque des revendications 13 et 14, dans lequel le dispositif de refroidissement (10) comprend au moins une cavité à un seul côté ayant une ouverture dans une surface externe de la plaque de base (40) et/ou dans une surface externe de la plaque de recouvrement (45), le procédé comprenant en outre la fourniture d'un dispositif de fermeture (110) et la fermeture amovible de l'ouverture de la cavité à un seul côté avec le dispositif de fermeture (110), après avoir au moins partiellement rempli la cavité d'une matière d'amortissement.
